# EUROPEAN PATENT SPECIFICATION

(11) **EP 3 453 193 B1**
(45) Date of publication and mention of the grant of the patent: **27.11.2019**
(21) Application number: 16722112.6
(22) Date of filing: 02.05.2016
(51) Int. Cl.: H04W 4/10, H04W 72/00, H04W 76/00

(54) **GROUP CALL SETUP IN A GROUP COMMUNICATIONS SYSTEM**
GRUPPENANRUFEINRICHTUNG IN EINEM GRUPPENKOMMUNIKATIONSSYSTEM
ÉTABLISSEMENT D'APPEL DE GROUPE DANS UN SYSTÈME DE COMMUNICATION DE GROUPE

(43) Date of publication of application: 13.03.2019
(73) Proprietor: Telefonaktiebolaget LM Ericsson (PUBL), 164 83 Stockholm (SE)
(72) Inventor: ÅKESSON, Joakim, S-438 32 Landvetter (SE); TRÄNK, Magnus, S-443 92 Lerum (SE)
(74) Representative: Ericsson
(86) International application number: PCT/EP2016/059792
(87) International publication number: WO 2017/190765

(56) References cited:
- US-A1- 2012 003 969
- US-A1- 2012 170 502

## Description

### TECHNICAL FIELD

Embodiments presented herein relate to methods, a control node, a client node, computer programs, and a computer program product for group call setup in a group communications system.

### BACKGROUND

In communications networks, there may be a challenge to obtain good performance and capacity for a given communications protocol, its parameters and the physical environment in which the communications network is deployed.

An example of applications available in some communications system is group communications services. In general terms, group communication means that the same information or media is delivered to multiple client nodes. In group communication systems (e.g., Push-To-Talk (PTT) systems) the client nodes receiving the same media constitute a group of client nodes. These client nodes may be located at different locations. If many client nodes are located within the same area, multicast or broadcast based transmission using e.g., Multicast-Broadcast Multimedia Services (MBMS) is efficient for communications to the group of client nodes, because communications resources such as time and frequency resources are shared among client nodes. If client nodes are spread out over a large geographical area it can be more efficient to use unicast transmission for communications to the group of client nodes.

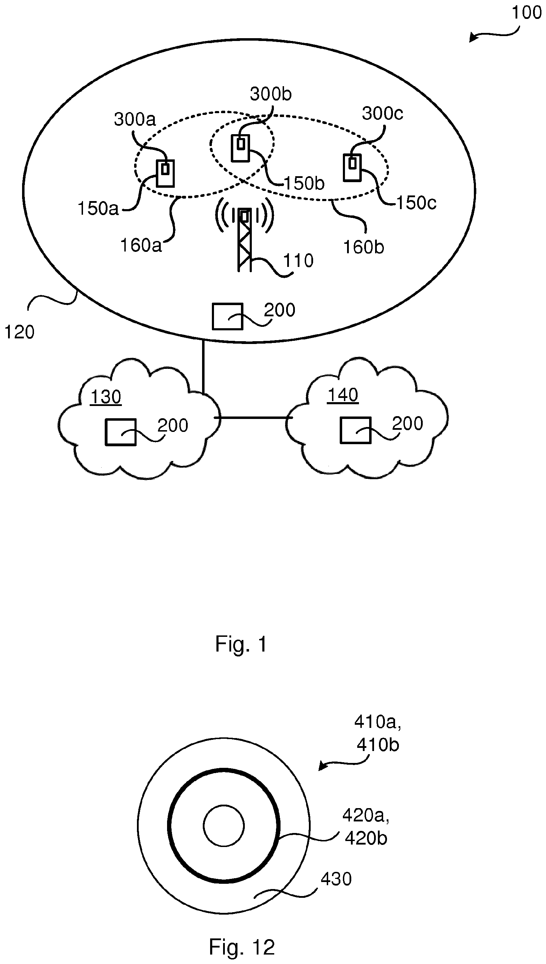

Fig. 1 is a schematic diagram illustrating a communications system 100 where embodiments presented herein can be applied. The communications system 100 is assumed to provide services for group communication and may hence be regarded as a group communications system. The group communications system 100 is, according to some aspects, a push to talk (PTT) system.

The communications system 100 comprises a radio access network 120, a core network 130, and a service network 140. The communications system 100 further comprises at least one control node 200 and at least one client node 300a, 300b, 300c. The at least one control node 200 may be provided in, or installed on, a radio access network node 110 or in another entity or device in the radio access network 120, in an entity or device of the core network 130, or in an entity or device of the service network 140. The at least one control node 200 could implement the functionality of a group communication application server (GCS AS). Each client node 300a, 300b, 300c may be provided in, or installed on, a respective wireless device 150a, 150b, 150c.

Each client node 300a, 300b, 300c can be part of a group 160a, 160b of client nodes node 300a, 300b, 300c. In the illustrative example of Fig. 1, client nodes 300a, 300b are part of one group 160a, and client nodes 300b, 300c are part of another group 160b.

The radio access network 120 is operatively connected to the core network 130 which in turn is operatively connected to the service network 140. The radio access network node 110 thereby enables the wireless devices 150a, 150b, 150C, and hence the client nodes 300a, 300b, 300c, to access services and exchange data as provided by the service network 140.

Examples of wireless devices 150a, 150b, 150c include, but are not limited to, mobile stations, mobile phones, handsets, wireless local loop phones, user equipment (UE), smartphones, laptop computers, and tablet computers. Examples of radio access network nodes 110 include, but are not limited to, radio base stations, base transceiver stations, node Bs, evolved node Bs, and access points. As the skilled person understands, the communications system 100 may comprise a plurality of radio access network nodes 110, each providing network access to a plurality of wireless devices 150a, 150b, 150c. The herein disclosed embodiments are not limited to any particular number of radio access network nodes 110, client nodes 300a, 300b, 300c, groups 160a, 160b, or wireless devices 150a, 150b, 150c.

In MBMS two transmission modes can be applied. A first transmission mode is known as Multicast-Broadcast Single Frequency Network (MBSFN). In this transmission mode a group of adjacent radio access network nodes 110 transmits the same signal simultaneously on the same frequency. In effect, this makes the MBSFN transmission appears to a wireless device 150a, 150b, 150c as a transmission from a single large cell, which dramatically increase the Signal-to-Interference Ratio (SIR) due to the absence of inter-cell interference.

A second transmission mode is known as Single Cell Point to Multipoint (SC-PTM). SC-PTM was introduced in 3GPP E-UTRAN in Rel-13. In this transmission mode only one radio access network node 110 transmit the data. This transmission mode does not provide the benefit of improved SIR due to contributions from neighboring radio access network nodes as in MBSFN. However, SC-PTM can be used with finer geographically granularity since SC-PTM will be used only in cells where the wireless devices 150a, 150b, 150c are located.

Another difference between MBSFN and SC-PTM transmission is the activation procedure in the radio access network. When using MBSFN an MBMS Control Channel (MCCH) is used to inform the wireless device in which subframe data will be transmitted. The MCCH can be transmitted every 320 ms and modified only every 5120 ms. In SC-PTM there is a corresponding channel (SC-MCCH) that can be transmitted every 20 ms and modified every 20 ms.

In a group communication system 100 the performance requirements for a call setup is typically shorter than 300 ms. When using MBSFN this implies that the MBSFN transmission must be pre-activated in the network and announced to the wireless device 150a, 150b, 150c prior the call setup. Furthermore the wireless device 150a, 150b, 150c needs to constantly monitor the MBMS bearer on the MBSFN transmission to listen for any call setup message. When using SC-PTM the transmission can be started by the call setup requests, and it is still possible to reach the call setup performance requirements.

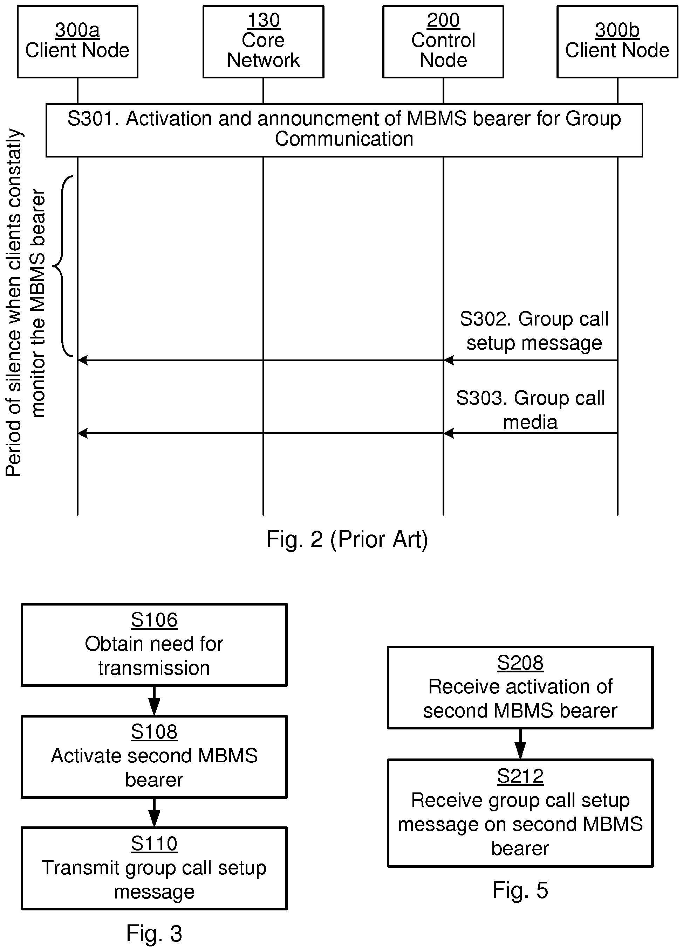

Reference is now made to Fig. 2 illustrating a signalling diagram according to prior art.

S301: When using MBMS (with MBSFN transmission) two preparation activities are performed. First, an MBMS bearer is activated. This will enable media to be sent over the network and broadcasted over the radio access network to the client node 300a, 300b in the wireless device 150a, 150b. In a 3GPP LTE network this is initiated in a Broadcast Multicast Service Center (BMSC) as defined in 3GPP TS 23.246 v13.3.0. Second, the client node 300a, 300b is informed of the service being broadcasted over the MBMS bearer. This is required so that the client node 300a, 300b knows how to receive the media over the MBMS bearer. This procedure is commonly known as a service announcement procedure and is defined in 3GPP TS 26.346 v13.3.0.

The client node 300a, 300b then monitors the MBMS bearer and waits for group call setup messages. Group Communication and specifically PTT calls are typically short with long periods of silence between the calls.

S302: A new group call setup message initiated for client node 300b, it is first sent to the control node 200, and the control node 200 forwards the setup message of the MBMS bearer to receiving client nodes, as represented by client node 300a.

S303: Group call media is sent from client node 300b to the control node 200, and the control node 200 broadcasts the media on the MBMS bearer so that the media can be received by client node 300a.

As demonstrated above, a group communication system that uses MBMS to transmit group calls over an MBSFN must pre-activate the MBMS bearer, and the wireless device must constantly be monitoring the radio frames that are allocated for the MBMS bearer. The group call setup messages as well as the group call media will be transmitted on the pre-activated bearer. The constant monitoring of the MBMS bearer is power consuming.

Hence, there is still a need for an improved group call setup in a group communications system.

A related technique can e.g. be found in the patent application published as US 2012/0170502 A1. The patent application relates to a 3GPP compliant system includes a radio access network (RAN) partitioned into a plurality MBMS services areas, wherein each MBMS service area has a plurality of MBMS bearers established a priori for transporting media streams. An infrastructure device: receives a request to transmit a media stream to a communication group, wherein the request to transmit is received after the MBMS bearers were established: determines a MBMS bearer in a MBMS service area to assign to transport the media stream: generates a MBMS connect message that binds the communication group to the assigned MBMS bearer, wherein the MBMS connect message includes an identifier for the communication group and an identifier for the assigned MBMS bearer: and sends the MBMS connect message to members of the communication group.

### SUMMARY

An object of embodiments herein is to provide efficient group call setup in a group communications system. The invention is defined by the subject matter of the independent claims which define a method performed by a client node and the client node apparatus. Advantageous enhancements are subject to the dependent claims.

Advantageously the method and the client node provide efficient group call setup in a group communications system.

Advantageously the method and the client node combine the benefits of using MBSFN transmission, which gives improved SIR, and SC-PTM, which provides a quicker setup time for a MBMS bearer. By this combination the wireless device hosting the client node does not constantly need to monitor an active MBSFN. This reduces power consumption i.e. save battery, and still provides the possibility to fast call setup in a group call transmitted on a MBSFN. There might be other wireless devices in the same area which are also aware of the MBSFN but are not interested in the specific call. Thus further advantageously, the MBMS bearer on the SC-PTM will only be activated in the cells where wireless devices interested in the call are located.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communications system according to embodiments;
Fig. 2 is a signalling diagram according to prior art;
Figs. 3, 4, 5, and 6 are flowcharts of methods according to embodiments; and
Fig. 7 is a signalling diagram according to an embodiment;
Fig. 8 is a schematic diagram showing functional units of a control node according to an embodiment;
Fig. 9 is a schematic diagram showing functional modules of a control node according to an embodiment;
Fig. 10 is a schematic diagram showing functional units of a client node according to an embodiment;
Fig. 11 is a schematic diagram showing functional modules of a client node according to an embodiment; and
Fig. 12 shows one example of a computer program product comprising computer readable means according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

As disclosed above, there is still a need for an improved group call setup in a group communications system.

At least some of the herein disclosed embodiments are based on combining the benefits of the above disclosed transmission modes in MBMS. An MBSFN can be pre-activated and notified to the client nodes. By that the MBSFN transmission is known to the client nodes 300a, 300b, 300c, however the client nodes 300a, 300b, 300c do not need to constantly listen for call setup messages on the MBMS bearer with MBSFN transmission and furthermore the client nodes 300a, 300b, 300c can stay in idle mode and still reach target performance requirements. When there is a group call starting, the group call setup message can be initiated on another MBMS bearer that utilizes an SC-PTM transmission to notify the client nodes 300a, 300b, 300c about the call. The group call setup message can include an MBMS bearer identity of the bearer that will be used to transfer the group call media. The identified MBMS bearer can use MBSFN transmission.

The embodiments disclosed herein thus relate to mechanisms for group call setup in a group communications system 100. In order to obtain such mechanisms there is provided a control node 200, a method performed by the control node 200, a computer program product comprising code, for example in the form of a computer program, that when run on processing circuitry of the control node 200, causes the control node 200 to perform the method. In order to obtain such mechanisms there is further provided a client node 300a, a method performed by the client node 300a, and a computer program product comprising code, for example in the form of a computer program, that when run on processing circuitry of the client node 300a, causes the client node 300a to perform the method.

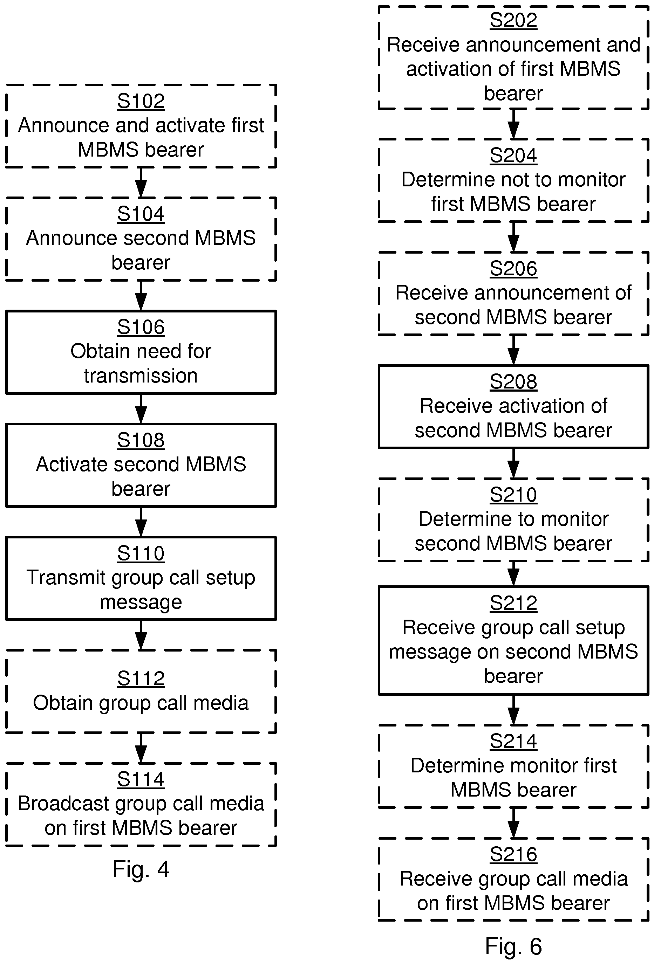

Figs. 3 and 4 are flow charts illustrating embodiments of methods for group call setup in a group communications system 100 as performed by the control node 200. Figs. 5 and 6 are flow charts illustrating embodiments of methods for group call setup in a group communications system 100 as performed by the client node 300a. The methods are advantageously provided as computer programs 420a, 420b.

Reference is now made to Fig. 3 illustrating a method for group call setup in a group communications system 100 as performed by the control node 200 according to an embodiment.

It is assumed that there is a need for transmission of group call media in the group communications system 100. The control node 200 is therefore configured to perform step S106:
S106: The control node 200 obtains a need for transmission of group call media to a group 160a, 160b of client nodes 300a, 300b, 300c in the group communications system 100.

The control node 200 then activates a previously announced MBMS bearer. The control node 200 is thus configured to perform step S108:
S108: The control node 200 activates a previously announced second MBMS bearer in response to having obtained the need.

Once the second MBMS bearer has been activated the control node 200 can transmit group call setup message for future transmission of the group call media. The control node 200 is thus configured to perform step S110:
S110: The control node 200 transmits a group call setup message on the second MBMS bearer. The group call setup message comprises at least an identity of a previously announced and activated first MBMS bearer.

This enables the control node 200 to quickly activate an MBMS bearer used for call setup messages. The setup time of this MBMS bearer will meet the performance requirements of group call setup procedures. The group call setup message comprises an identifier of a previously activated and announced MBMS bearer, which the client node 300a, 300b, 300c starts to monitor when the call setup message is received. This means that the client node 300a, 300b, 300c does not need to constantly monitor the MBMS bearer used for group communication when there are no active calls. This reduces power consumption in the wireless device 150a, 150b, 150c hosting the client node 300a, 300b, 300c.

Reference is now made to Fig. 4 illustrating methods for group call setup in a group communications system 100 as performed by the control node 200 according to further embodiments. It is assumed that steps S106, S108, S110 are performed as disclosed above and a thus repeated description thereof is therefore omitted.

There may be different ways for the control node 200 to act before obtaining the need for transmission of group call media in step S106. For example, according to an embodiment the control node 200 is configured to announce and activate the first MBMS bearer as in step S102:
S102: The control node 200 announces and activates the first MBMS bearer before obtaining the need (in step S106).

For example, according to an embodiment the control node 200 is configured to announce the second MBMS bearer as in step S104:
S104: The control node 200 announces the second MBMS bearer before obtaining the need (in step S106).

The order in which steps S102 and S104 are performed does not matter as long as both steps are performed before step S106.

There may be different ways for the control node 200 to obtain the need (in step S106). For example, the need can be defined by a received group call setup message from one of the client nodes 300a, 300b, 300c. Hence, according to an embodiment the need for transmission is obtained by receiving the group call setup message from one of the client nodes (300a, 300b, 300c.

There may be different ways to for the control node 200 to handle the transmission of the group call media. For example, according to an embodiment the control node 200 is configured to handle the transmission of the group call media as in steps S112 and S114:
S112: The control node 200 obtains the group call media.
S114: The control node 200 broadcasts the group call media to the group 160a, 160b of client nodes 300a, 300b, 300c on the first MBMS bearer.

At least step S114 is performed after the group call setup message in step S110 has been transmitted.

Reference is now made to Fig. 5 illustrating a method for group call setup in a group communications system 100 as performed by the client node 300a according to an embodiment.

As disclosed above, the control node 200 in step S108 activates a previously announced second MBMS bearer. It is here assumed that the client node 300a receives an indication of this activation. Hence, the client node 300a is configured to perform step S208:
S208: The client node 300a receives system information indicating activation of a previously announced second MBMS bearer from the control node 200.

As also disclosed above, the control node in step S110 transmits a group call setup message on the second MBMS bearer. It is here assumed that the client node 300a receives this group call setup message. Hence, the client node 300a is configured to perform step S212:
S212: The client node 300a receives a group call setup message on the second MBMS bearer from the control node 200. As disclosed above the group call setup message comprises at least an identity of a previously announced and activated first MBMS bearer.

Reference is now made to Fig. 6 illustrating methods for group call setup in a group communications system 100 as performed by the client node 300a according to further embodiments. It is assumed that steps S208, S212 are performed as disclosed above and a thus repeated description thereof is therefore omitted.

As disclosed above, according to an embodiment the control node 200 in step S102 announces and activates the first MBMS bearer. It can be assumed that the client node 300a receives an indication of this announcement and activation. Hence, according to an embodiment the client node 300a is configured to perform step S202:
S202: The client node 300a receives announcement and system information indicating activation of the first MBMS bearer from the control node 200 before receiving the activation of the second MBMS bearer (in step S208).

There can be different ways for the client node 300a to act once having received the announcement and system information in step S202. According to some aspects the client node 300a determines not to monitor this first bearer. Hence, according to an embodiment the client node 300a is configured to perform step S204:
S204: The client node 300a determines not to monitor the first MBMS bearer upon receiving the system information indicating the activation of the first MBMS bearer (in step S202).

As disclosed above, according to an embodiment the control node 200 in step S104 announces the second MBMS bearer. It can be assumed that the client node 300a receives an indication of this announcement. Hence, according to an embodiment the client node 300a is configured to perform step S206:
S206: The client node 300a receives announcement of the second MBMS bearer from the control node 200 before receiving the activation of the second MBMS bearer (in step S208).

There can be different ways for the client node 300a to act once having received the activation in step S208. According to some aspects the client node 300a determines to monitor this second bearer. Hence, according to an embodiment the client node 300a is configured to perform step S210:
S210: The client node 300a determines to monitor the second MBMS bearer upon receiving the activation indication of the second MBMS bearer (in step S208).

There can be different ways for the client node 300a to act once having received the group call setup message in step S212. According to some aspects the client node 300a determines to monitor this first bearer. Hence, according to an embodiment the client node 300a is configured to perform step S214:
S214: The client node 300a determines to monitor the first MBMS bearer upon receiving the group call setup message (in step S212).

As disclosed above, according to an embodiment the control node 200 in step S114 broadcasts the group call media. It can be assumed that the client node 300a receives the group call media. Hence, according to an embodiment the client node 300a is configured to perform step S216:
S216: The client node 300a receives group call media on the first MBMS bearer from the control node 200.

Embodiments which are applicable to the methods for group call setup in a group communications system 100 as performed by both the control node 200 and the client node 300a will now be described in turn.

According to an embodiment the first MBMS bearer and the second MBMS bearer uses mutually different transmission modes. Hence, a first transmission mode can be used for the first MBMS bearer, and a second transmission mode can be used for the second MBMS bearer, where the second transmission mode is different from the first transmission mode. The second transmission mode can have shorter start-up time than the first transmission mode. According to an embodiment the first MBMS bearer uses MBSFN transmission. According to an embodiment the second MBMS bearer uses SC-PTM transmission.

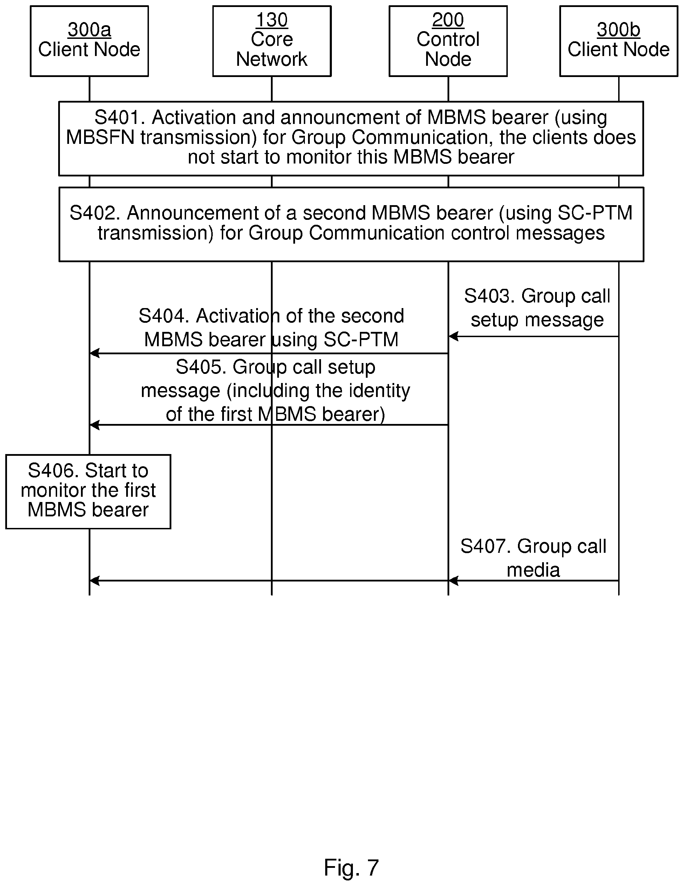

One particular embodiment for group call setup in a group communications system 100 as performed by the control node 200 and the client node 300a based on at least some of the above disclosed embodiments will now be disclosed in detail with reference to the signalling diagram of Fig. 7.

S401: When using MBMS (with MBSFN transmission) two preparation activities are performed. First, an MBMS bearer is activated. This will enable media to be sent over the network and broadcasted over the radio access network to the client node 300a, 300b in the wireless device 150a, 150b. In a 3GPP LTE network this is initiated in a Broadcast Multicast Service Center (BMSC) as defined in 3GPP TS 23.246 v13.3.0. Second, the client node 300a, 300b is informed of the service being broadcasted over the MBMS bearer.

However the client node 300a, 300b does not need to immediately start monitoring the first MBMS bearer. Optionally, the client node 300a, 300b could start to monitor the first MBMS bearer for a short period of time and acknowledge to the control node 200 that the client node 300a, 300b is able to monitor the first MBMS bearer.

One way to implement step S401 is to perform any of step S102, step S202, and S204.

S402: The control node 200 announces a second MBMS bearer (using SC-PTM transmission) is to the client node 300a, 300b. Note that the second MBMS bearer is not activated. It is only announced to the client node 300a, 300b that there could be a MBMS bearer started at any time with the purpose to send group call setup messages. One way to implement step S402 is to perform any of step S104 and step S206.

S403: The control node 200 obtains a need for transmission of group call media by receiving a group call setup message from client node 300b. One way to implement step S403 is to perform step S106.

S404: The control node 200 activates the previously announced second MBMS bearer using SC-PTM transmission. The activation request can be sent from the control node 200 to a broadcast multicast service centre (BM-SC) which sets up the MBMS bearer. One way to implement step S404 is to perform any of step S108, step S208, step S210.

S405: The control node 200 transmits a group call setup message on the second MBMS bearer to the client node 300a. This message includes an identifier of the first MBMS bearer. One way to implement step S405 is to perform any of step S110 and step S212.

S406: The client node 300a (immediately) starts to monitor the first MBMS bearer. One way to implement step S406 is to perform step S214.

S407: Group call media is sent from client node 300b to the control node 200, and the control node 200 broadcasts the media on the first MBMS bearer so that the media can be received by client node 300a. One way to implement step S407 is to perform any of step S114 and step S216.

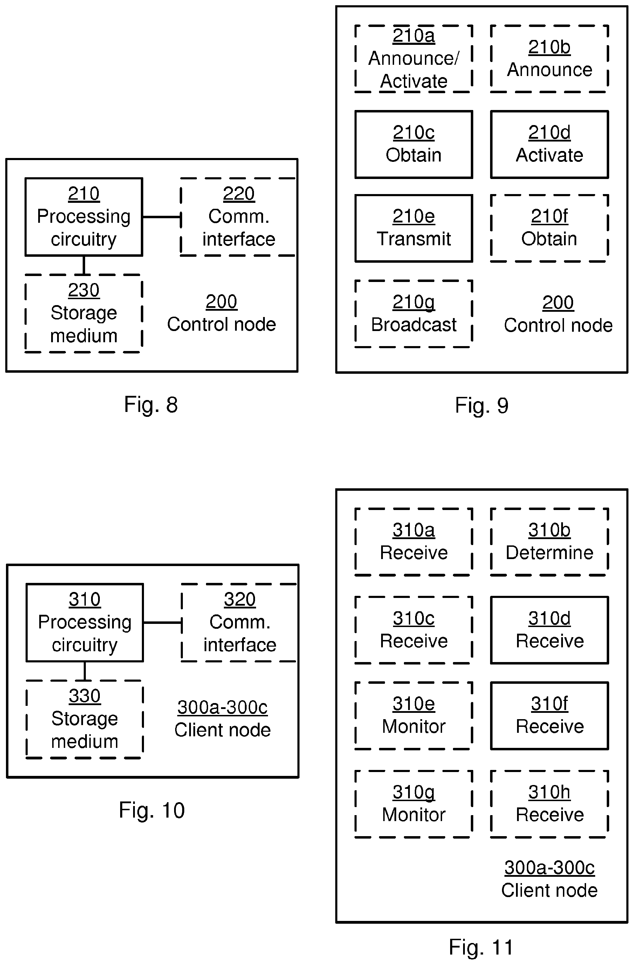

Fig. 8 schematically illustrates, in terms of a number of functional units, the components of a control node 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 410a (as in Fig. 12), e.g. in the form of a storage medium 230. The processing circuitry 210 may further be provided as at least one application specific integrated circuit (ASIC), or field programmable gate array (FPGA).

Particularly, the processing circuitry 210 is configured to cause the control node 200 to perform a set of operations, or steps, S102-S114, as disclosed above. For example, the storage medium 230 may store the set of operations, and the processing circuitry 210 may be configured to retrieve the set of operations from the storage medium 230 to cause the control node 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The control node 200 may further comprise a communications interface 220 for communications at least with a client node 300a, 300b, 300c and preferably with entities and devices of the radio access network 120, the core network 130 and the service network 140. As such the communications interface 220 may comprise one or more transmitters and receivers, comprising analogue and digital components and a suitable number of antennas for wireless communications and ports for wireline communications.

The processing circuitry 210 controls the general operation of the control node 200 e.g. by sending data and control signals to the communications interface 220 and the storage medium 230, by receiving data and reports from the communications interface 220, and by retrieving data and instructions from the storage medium 230. Other components, as well as the related functionality, of the control node 200 are omitted in order not to obscure the concepts presented herein.

Fig. 9 schematically illustrates, in terms of a number of functional modules, the components of a control node 200 according to an embodiment. The control node 200 of Fig. 9 comprises a number of functional modules; an obtain module 210c configured to perform step S106, an activate module 210d configured to perform step S108, and a transmit module 210e configured to perform step S110. The control node 200 of Fig. 9 may further comprise a number of optional functional modules, such as any of an announce and activate module 210a configured to perform step S102, an announce module 210b configured to perform step S104, an obtain module 210f configured to perform step S112, and a broadcast module 210g configured to perform step S114. In general terms, each functional module 210a-210g may be implemented in hardware or in software. Preferably, one or more or all functional modules 210a-210g may be implemented by the processing circuitry 210, possibly in cooperation with functional units 220 and/or 230. The processing circuitry 210 may thus be arranged to from the storage medium 230 fetch instructions as provided by a functional module 210a-210g and to execute these instructions, thereby performing any steps of the control node 200 as disclosed herein.

The control node 200 may be provided as a standalone device or as a part of at least one further device. For example, the control node 200 may be provided in a node of the radio access network 120 or in a node of the core network 130 or in a node of the service network 140. Alternatively, functionality of the control node 200 may be distributed between at least two devices, or nodes. These at least two nodes, or devices, may either be part of the same network part (such as the radio access network or the core network or the service network) or may be spread between at least two such network parts. Some examples of where in the communications system 100 the control node 200 may be provided are illustrated in Fig. 1.

Functionality of the control node 200 may be implemented at the service layer of the protocol stack. In general terms, instructions that are required to be performed in real time may be performed in a device, or node, operatively closer to the radio access network 120 than instructions that are not required to be performed in real time. In this respect, at least part of the control node 200 may reside in the radio access network 120, such as in the radio access network node 110, for cases when embodiments as disclosed herein are performed in real time.

Thus, a first portion of the instructions performed by the control node 200 may be executed in a first device, and a second portion of the of the instructions performed by the control node 200 may be executed in a second device; the herein disclosed embodiments are not limited to any particular number of devices on which the instructions performed by the control node 200 may be executed. Hence, the methods according to the herein disclosed embodiments are suitable to be performed by a control node 200 residing in a cloud computational environment. Therefore, although a single processing circuitry 210 is illustrated in Fig. 8 the processing circuitry 210 may be distributed among a plurality of devices, or nodes. The same applies to the functional modules 210a-210g of Fig. 9 and the computer program 420a of Fig. 12 (see below).

Fig. 10 schematically illustrates, in terms of a number of functional units, the components of a client node 300a according to an embodiment. Processing circuitry 310 is provided using any combination of one or more of a suitable central processing unit (CPU), multiprocessor, microcontroller, digital signal processor (DSP), etc., capable of executing software instructions stored in a computer program product 410b (as in Fig. 12), e.g. in the form of a storage medium 330. The processing circuitry 310 may further be provided as at least one application specific integrated circuit (ASIC), or field programmable gate array (FPGA).

Particularly, the processing circuitry 310 is configured to cause the client node 300a to perform a set of operations, or steps, S202-S216, as disclosed above. For example, the storage medium 330 may store the set of operations, and the processing circuitry 310 may be configured to retrieve the set of operations from the storage medium 330 to cause the client node 300a to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The client node 300a may further comprise a communications interface 320 for communications at least with the control node 200 and preferably with entities and devices of the radio access network 120, the core network 130 and the service network 140. As such the communications interface 320 may comprise one or more transmitters and receivers, comprising analogue and digital components and a suitable number of antennas for wireless communications and ports for wireline communications.

The processing circuitry 310 controls the general operation of the client node 300a e.g. by sending data and control signals to the communications interface 320 and the storage medium 330, by receiving data and reports from the communications interface 320, and by retrieving data and instructions from the storage medium 330. Other components, as well as the related functionality, of the client node 300a are omitted in order not to obscure the concepts presented herein.

Fig. 11 schematically illustrates, in terms of a number of functional modules, the components of a client node 300a according to an embodiment. The client node 300a of Fig. 11 comprises a number of functional modules; a receive module 310d configured to perform step S208, and a receive module 310f configured to perform step S212. The client node 300a of Fig. 11 may further comprises a number of optional functional modules, such as any of a receive module 310a configured to perform step S202, a determine module 310b configured to perform step S204, a receive module 310c configured to perform step S206, a monitor module 310e configured to perform step S210, a monitor module 310g configured to perform step S214, and a receive module 310h configured to perform step S216.

In general terms, each functional module 310a-310h may be implemented in hardware or in software. Preferably, one or more or all functional modules 310a-310h may be implemented by the processing circuitry 310, possibly in cooperation with functional units 320 and/or 330. The processing circuitry 310 may thus be arranged to from the storage medium 330 fetch instructions as provided by a functional module 310a-310h and to execute these instructions, thereby performing any steps of the client node 300a as disclosed herein.

The client node 300a may be provided as a standalone device or as a part of at least one further device. For example, the client node 300a may be provided in a wireless device 150a. Hence, any processing circuitry, communications interface and storage medium of the wireless device 150a may be shared with the processing circuitry 310, communications interface 320 and storage medium 330 of the client node 300a. It is thus not necessary for the client node 300a to have its own processing circuitry 310, communications interface 320 and storage medium 330 as long as the processing circuitry, communications interface and storage medium of the wireless device 150a is configured to implement the functionality of the herein disclosed client node 300a.

Fig. 12 shows one example of a computer program product 410a, 410b comprising computer readable means 430. On this computer readable means 430, a computer program 420a can be stored, which computer program 420a can cause the processing circuitry 210 and thereto operatively coupled entities and devices, such as the communications interface 220 and the storage medium 230, to execute methods according to embodiments described herein. The computer program 420a and/or computer program product 410a may thus provide means for performing any steps of the control node 200 as herein disclosed. On this computer readable means 430, a computer program 420b can be stored, which computer program 420b can cause the processing circuitry 310 and thereto operatively coupled entities and devices, such as the communications interface 320 and the storage medium 330, to execute methods according to embodiments described herein. The computer program 420b and/or computer program product 410b may thus provide means for performing any steps of the client node 300a as herein disclosed.

In the example of Fig. 12, the computer program product 410a, 410b is illustrated as an optical disc, such as a CD (compact disc) or a DVD (digital versatile disc) or a Blu-Ray disc. The computer program product 410a, 410b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 420a, 420b is here schematically shown as a track on the depicted optical disk, the computer program 420a, 420b can be stored in any way which is suitable for the computer program product 410a, 410b.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for group call setup in a group communications system (100), the method being performed by a client node (300a), the method comprising:
receiving (S208) system information indicating activation of a previously announced second MBMS bearer from a control node (200);
receiving (S212) a group call setup message on the second MBMS bearer from the control node (200), wherein the group call setup message comprises at least an identity of a previously announced and activated first MBMS bearer
determining (S210) to monitor the second MBMS bearer upon receiving the activation indication of the second MBMS bearer.

2. The method according to claim 1, further comprising:
receiving (S202) announcement and system information indicating activation of the first MBMS bearer from the control node (200) before receiving the activation of the second MBMS bearer.

3. The method according to claim 2, further comprising:
determining (S204) not to monitor the first MBMS bearer upon receiving the system information indicating the activation of the first MBMS bearer.

4. The method according to claim 2 or 3, further comprising:
receiving (S206) announcement of the second MBMS bearer from the control node (200) before receiving the activation of the second MBMS bearer.

5. The method according to any of claims 1 to 4, further comprising:
receiving (S216) group call media on the first MBMS bearer from the control node (200).

6. The method according to any of the preceding claims, wherein the first MBMS bearer and the second MBMS bearer uses mutually different transmission modes.

7. The method according to any of the preceding claims, wherein the first MBMS bearer uses Multicast-Broadcast Single-Frequency Network, MBSFN, transmission.

8. The method according to any of the preceding claims, wherein the second MBMS bearer uses Single-Cell Point-to-Multipoint, SC-PTM, transmission.

9. A client node (300a) for group call setup in a group communications system (100), the client node (300a) comprising processing circuitry (310), the processing circuitry being configured to cause the client node (300a) to:
receive system information indicating activation of a previously announced second MBMS bearer from a control node (200);
receive a group call setup message on the second MBMS bearer from the control node (200), wherein the group call setup message comprises at least an identity of a previously announced and activated first MBMS bearer; and
determine to monitor the second MBMS bearer upon receiving the activation indication of the second MBMS bearer.

## Patentansprüche

1. Verfahren für Gruppenanrufaufbau in einem Gruppenkommunikationssystem (100), wobei das Verfahren durch einen Client-Knoten (300a) durchgeführt wird, wobei das Verfahren umfasst:
Empfangen (S208) von Systeminformationen, die Aktivierung eines vorab bekanntgegebenen zweiten MBMS-Trägers angeben, von einem Steuerknoten (200);
Empfangen (S212) einer Gruppenanrufaufbaunachricht auf dem zweiten MBMS-Träger vom Steuerknoten (200), wobei die Gruppenanrufaufbaunachricht mindestens eine Identität eines vorab bekanntgegebenen und aktivierten ersten MBMS-Trägers umfasst
Bestimmen (S210), den zweiten MBMS-Träger zu überwachen, nach Empfangen der Aktivierungsangabe des zweiten MBMS-Trägers.

2. Verfahren nach Anspruch 1, weiter umfassend:
Empfangen (S202) von einer Bekanntgabe und Systeminformationen, die Aktivierung des ersten MBMS-Trägers angeben, vom Steuerknoten (200) vor Empfangen der Aktivierung des zweiten MBMS-Trägers.

3. Verfahren nach Anspruch 2, weiter umfassend:
Bestimmen (S204), den ersten MBMS-Träger nach Empfangen der Systeminformationen, welche die Aktivierung des ersten MBMS-Trägers angeben, nicht zu überwachen.

4. Verfahren nach Anspruch 2 oder 3, weiter umfassend:
Empfangen (S206) einer Bekanntgabe des zweiten MBMS-Trägers vom Steuerknoten (200) vor Empfangen der Aktivierung des zweiten MBMS-Trägers.

5. Verfahren nach einem der Ansprüche 1 bis 4, weiter umfassend:
Empfangen (S216) von Gruppenanrufmedien auf dem ersten MBMS-Träger vom Steuerknoten (200).

6. Verfahren nach einem der vorstehenden Ansprüche, wobei der erste MBMS-Träger und der zweite MBMS-Träger voneinander verschiedene Übertragungsmodi verwendet.

7. Verfahren nach einem der vorstehenden Ansprüche, wobei der erste MBMS-Träger Multicast-Broadcast-Einzelfrequenznetzwerk ("Multicast-Broadcast Single-Frequency Network")-, MBSFN-, Übertragung verwendet.

8. Verfahren nach einem der vorstehenden Ansprüche, wobei der zweite MBMS-Träger Einzelzellen-Point-to-Multipoint ("Single-Cell Point-to-Multipoint")-, SC-PTM-, Übertragung verwendet.

9. Client-Knoten (300a) für Gruppenanrufaufbau in einem Gruppenkommunikationssystem (100), wobei der Client-Knoten (300a) Verarbeitungsschaltkreise (310) umfasst, wobei die Verarbeitungsschaltkreise konfiguriert sind, um den Client-Knoten (300a) dazu zu veranlassen:
Systeminformationen, die Aktivierung eines vorab bekanntgegebenen zweiten MBMS-Trägers angeben, von einem Steuerknoten (200) zu empfangen;
eine Gruppenanrufaufbaunachricht auf dem zweiten MBMS-Träger vom Steuerknoten (200) zu empfangen, wobei die Gruppenanrufaufbaunachricht mindestens eine Identität eines vorab bekanntgegebenen und aktivierten ersten MBMS-Trägers umfasst; und
zu bestimmen, den zweiten MBMS-Träger zu überwachen, nach Empfangen der Aktivierungsangabe des zweiten MBMS-Trägers.

## Revendications

1. Procédé d'établissement d'appel de groupe dans un système de communication de groupe (100), le procédé étant effectué par un nœud client (300a), le procédé comprenant :
la réception (S208) d'informations de système indiquant une activation d'un second support MBMS précédemment annoncé à partir d'un nœud de commande (200) ;
la réception (S212) d'un message d'établissement d'appel de groupe sur le second support MBMS à partir du nœud de commande (200), dans lequel le message d'établissement d'appel de groupe comprend au moins une identité d'un premier support MBMS précédemment annoncé et activé
la détermination (S210) de surveiller le second support MBMS à la réception de l'indication d'activation du second support MBMS.

2. Procédé selon la revendication 1, comprenant en outre :
la réception (S202) d'une annonce et d'informations de système indiquant une activation du premier support MBMS à partir du nœud de commande (200) avant la réception de l'activation du second support MBMS.

3. Procédé selon la revendication 2, comprenant en outre :
la détermination (S204) de ne pas surveiller le premier support MBMS à la réception des informations de système indiquant l'activation du premier support MBMS.

4. Procédé selon la revendication 2 ou 3, comprenant en outre :
la réception (S206) d'une annonce du second support MBMS à partir du nœud de commande (200) avant la réception de l'activation du second support MBMS.

5. Procédé selon l'une quelconque des revendications 1 à 4, comprenant en outre :
la réception (S216) de média d'appel de groupe sur le premier support MBMS à partir du nœud de commande (200).

6. Procédé selon l'une quelconque des revendications précédentes, dans lequel le premier support MBMS et le second support MBMS utilise des modes de transmission mutuellement différents.

7. Procédé selon l'une quelconque des revendications précédentes, dans lequel le premier support MBMS utilise une transmission de réseau à fréquence unique de radiodiffusion/multidiffusion, MBSFN.

8. Procédé selon l'une quelconque des revendications précédentes, dans lequel le second support MBMS utilise une transmission de point à multipoint à cellule unique, SC-PTM.

9. Nœud client (300a) pour l'établissement d'appel de groupe dans un système de communication de groupe (100), le nœud client (300a) comprenant une circuiterie de traitement (310), la circuiterie de traitement étant configurée pour amener le nœud client (300a) à :
recevoir des informations de système indiquant une activation d'un second support MBMS précédemment annoncé à partir d'un nœud de commande (200) ;
recevoir un message d'établissement d'appel de groupe sur le second support MBMS à partir du nœud de commande (200), dans lequel le message d'établissement d'appel de groupe comprend au moins une identité d'un premier support MBMS précédemment annoncé et activé ; et
déterminer de surveiller le second support MBMS à la réception de l'indication d'activation du second support MBMS.
